# EUROPEAN PATENT APPLICATION

(11) **EP 3 831 495 A1**
(43) Date of publication of application: **09.06.2021**
(21) Application number: 19213639.8
(22) Date of filing: 04.12.2019
(51) Int. Cl.: B03C 7/12, B03C 7/00, B03C 3/74, A23J 1/14

(54) **ELECTROSTATIC SEPARATOR FOR FOODSTUFF**

(71) Applicant: Stichting Wageningen Research, 6708 PB Wageningen (NL)
(72) Inventor: Dijkink, Bert Hans, 7611 VS Ede (NL); Schroot, Henkdrikus Gozewinus, 4024 BT Eck en Wiel (NL)
(74) Representative: V.O.

(57) **Abstract**

The invention is directed to an electrostatic separator for the separation of foodstuff components present in a foodstuff composition, said separator comprising a separation chamber and at least three plate electrodes positioned in the separation chamber, wherein the plate electrodes are positioned substantially parallel and are spaced apparat from adjacent plate electrodes; at least part of an outer surface of the plate electrodes faces at least part of an outer surface of adjacent plate electrodes; a flow path for a stream of foodstuff components is provided between the outer surface parts of adjacent plate electrodes which are facing each other; and the plate electrodes are alternately chargeable with a positive and a negative electric charge or alternately grounded and either positively or negatively chargeable. In a further aspect, the invention is directed to method for the electrostatic separation of foodstuff components present in a foodstuff composition by the electrostatic separator.

## Description

The invention is in the field of separating foodstuff components. In particular, the invention is directed to an electrostatic separator for separating foodstuff components and a method of using said separator for separating foodstuff.

Separation (also referred to a fractionation or classification) of foodstuff components is an effective means to separate the components into a fraction that is enriched and a fraction that is depleted in a specific target component, such as proteins or fibers. Traditionally, the separation can be carried out by wet or by dry processes. Examples of conventional dry separation processes include air classification (also referred to as air sifting or wind sifting) and sieving.

As disclosed in Wang et al., Separation and Purification Technology 152 (2015) 164-171 (hereinafter referred to as Wang 2015), electrostatic separation is an upcoming technology for the dry separation of foodstuff components. Electrostatic separation technology has been applied for decades in mining industries for beneficiation of minerals and coal, and for fractionation of plastic waste. Electrostatic separation is based on the principle of tribo-electrostatic charging of the foodstuff components and subsequent separation of the components in an electric field. Due to their different tribo-electrostatic properties, different materials such as proteins and fibers, charge either positively or negatively when sliding along a surface made of a different material.

In an electrostatic separation process, lupine protein enriched fractions have been obtained with a protein concentration of about 59 g/100 g dry solids. As disclosed in Wang et al. Innovative Food Science and Emerging Technologies 33 (2016) 596-602, with a multiple electrostatic separation process where the protein rich fraction is separated, a maximum of 65% protein on dry weight could be reached after three passes.

In Wang 2015, an electrostatic separator for foodstuff is disclosed. A drawback of this separator is the equipment size, the concomitant investment cost and safety aspects such as the powder handling. Notably, the foodstuff particles are typically much smaller than particles in the mining industry and the plastic industry, for which conventional electrostatic separators are typically built. Moreover, the efficiency of the conventional separators is relatively low when separating foodstuff components. Also, foodstuff components generally comprise oil and/or fat components, resulting in relatively strong adhesion of these components to parts of the electrostatic separator. It is desired to solve at least part of one or more of these drawbacks.

The present invention is directed to an electrostatic separator particularly suitable for the continuous separation of foodstuff components. The present inventors realized that in view of the particular small foodstuff particles, it is beneficial to reduce separation time by placing a plurality of plate electrodes closer to each other compared to conventional electrostatic separators.

Accordingly, in a first aspect the invention is particularly directed to an electrostatic separator for the separation of foodstuff components, said separator comprising a separation chamber and at least three plate electrodes positioned in the separation chamber, wherein
- the plate electrodes are positioned substantially parallel and are spaced apart from adjacent plate electrodes;
- at least part of an outer surface of the plate electrodes faces at least part of an outer surface of adjacent plate electrodes;
- a flow path for a stream of foodstuff components is provided between the outer surface parts of adjacent plate electrodes which are facing each other; and
- the plate electrodes are alternately chargeable with a positive and a negative electric charge or alternately grounded and either positively or negatively electric chargeable.

In another aspect, the invention is directed to a method for the electrostatic separation of foodstuff components in the electrostatic separator, comprising the steps of
- providing a stream of foodstuff comprising foodstuff components;
- tribo-electrostatically charging at least part of the foodstuff components to provide a stream of charged foodstuff components;
- flowing the stream of charged foodstuff components into the separation chamber following the flow path; and
- collecting at least two streams of separated foodstuff components.

The gist of the chargeability of the plate electrodes is that a net electric potential can be created over the flow path, such that the tribo-electrostatically charged particles in the stream following the flow path can be separated. With alternately positive and a negative electric chargeable is meant that every other plate of the at least three plate electrodes in the separation chamber is positively chargeable, while the plate or plates in between and adjacent to each of these positively chargeable plates are negatively chargeable, or vice versa. For instance, in an embodiment comprising five plate electrodes, the plates may be alternately charged in a pattern +/-/+/-/+, wherein + represents a positively chargeable plate and-represents a negatively chargeable plate. Alternatively, the pattern may be-/+/-/+/-.

Similarly, with alternately grounded and either positively or negatively electric chargeable is meant that every other plate of the at least three plate electrodes positioned in the separation chamber is positively chargeable while the plate or plates in between and adjacent to these positively chargeable plates are grounded (*i*.*e*. having no charge), or that every other plate is negatively chargeable while the plate or plates in between and adjacent to these positively chargeable plates are grounded. For instance, in an embodiment comprising five plate electrodes, the plates may be alternately charged in a pattern +/0/+/0/+, wherein + represents a positively chargeable plate and 0 represents a grounded plate. Alternatively, the pattern may be 0/+/0/+/0.

Foodstuff that can be processed in accordance with the present invention generally comprises small foodstuff particles that are fine-milled or ground to particles having a particle size of less than 400 µm. Of this composition, the food components that are to be charged and separated have a typical particle size of less than 100 µm. This is generally much smaller than the particles that are traditionally separated in the mining industry or plastic industry wherein the particles are generally in the order of magnitude of several millimeters or larger. Moreover, particles that are traditionally separated in the mining industry or plastic industry typically have a much higher flowability than small foodstuff particles. In a typical embodiment according to the present invention, the particles that are at least partially tribo-electrostatically charged have a size of less than 100 µm, *e.g.* less than 80 µm. The invention is particularly suitable for the separation of foodstuff components comprising foodstuff particles having a particle size in the range of 0.1 to 60 µm, preferably in the range of 1 to 40 µm. The fine-milling or grinding of the foodstuff particles can be carried out using conventional milling and grinding technologies known in the art.

For instance, fatty soya and fatty lupine flours are generally ground to a particle size of about maximally 400 and 250 µm, respectively. The protein particles in these flours that can be charged and separated according to the present invention have a particle size of around 10 µm. Other protein particles are fixated to larger particles, which are generally not charged and separated, but the size of these larges particles do enable of an overall smooth process.

The present invention is particularly suitable for the preparation of protein-enriched foodstuff or for reducing the ash content in wheat flour. For instance, proteins such as gluten can be separated from other components such as fibers (*e*.*g*. aleurone fibers) and polysaccharides (*e*.*g*. starch). These foodstuff components are typically each characterized by different electrostatic properties such that they can attain a different charge during tribo-electrostatic charging, at least when two of these components are present. If three of the components are present, *e*.*g*. the components proteins, fibers and starch, generally one fraction is obtained by the separation that is enriched in two components, while another fraction is enriched in the other, third remaining component. To further separate the fraction that is enriched in two components, a further electrostatic separation can be carried out, and so on. These further electrostatic separations can be carried out similarly to the first separation. Accordingly, the invention is suitable for the separation of a foodstuff composition comprising at least two foodstuff components selected from the group consisting of proteins, fibers such as cell walls, aleurone fibers, beta glucans and seed coats, and polysaccharides such as starch.

Alternatively, or additionally, the electrostatic separation can be preceded by another dry separation step such as conventional air sifting to first separate one or more components before the remaining foodstuff components are entered in the electrostatic separation according to the present invention. For instance, in a particular embodiment, starch-rich foodstuff based on peas or faba beans (*Vicia* faba) can be pretreated by air sifting to separate at least part of the starch. After this, the starch-depleted remaining foodstuff composition can be separated in the electrostatic separation according to the present invention to obtain a protein-enriched fraction and a fiber-enriched fraction.

For protein-rich foodstuff based on lupine or soy, the present invention is particularly advantageous because the proteins and fibers therein can not efficiently be separated by air sifting. Because fibers generally degrade the quality of a foodstuff composition, it is particularly beneficial to at least separate these fibers from other components such as proteins.

The foodstuff composition comprising the foodstuff components mentioned above, can be based on a variety of food sources. Particularly preferred foodstuff compositions are those selected or originating from the group consisting of pulses, in particular oil-comprising pulses, press cakes, grains, in particular cereal grains. More preferably the foodstuff composition is selected from the group consisting of de-oiled press cakes, oil-comprising pulse flour and wheat flour, most preferably from the group consisting of soy flour and lupine flour for their high protein-contents.

Due to the typically small particle size of the foodstuff composition, the plate electrodes are preferably spaced apart by a distance in the range of 1 mm to 5 cm, preferably 5 mm to 2.5 cm, more preferably 7.5 mm to 1.5 cm such as about 1 cm. Accordingly, the pathway that the foodstuff particles need to travel to a plate are at a shorter distance. For instance, the average traveling distance of a particle may be 0.25 cm when adjacent plate electrodes are spaced by 1 cm (considering 9 spaced plates, *vide infra*), while, for comparison, the average traveling distance of a particle is 2.35 cm when adjacent plate electrodes are spaced by 10 cm (considering 2 spaced plates). Without wishing to be bound by theory, the inventors believe that this smaller spacing between the plate electrodes results in higher yields and purities due to the reduced chance that the charged particles hit other particles and thereby lose their direction, impulse or charge. For instance, the distance between the electrodes disclosed in Wang 2015 is between 10 and 25 cm resulting in a much larger average pathway to be transvers by the charged particles and concomitantly a much larger chance that a particle hits another particle.

Another drawback of the larger spacing between plate electrodes in conventional electrostatic separators is the higher field strength and applied voltage that are required. For instance, Wang 2015 discloses an electric field strength of 100 to 250 kV/m and an applied voltage between 10 and 25 kV. Due to the typically small particle size of the foodstuff particles, the separator and the method according to the invention preferably meet the so-called ATEX requirements for explosive atmospheres laid down in European Directives 99/92/EC and 94/9/EC. As such, it is preferable that the electric spark which may be created by an abrupt discharge between the plate electrodes has an energy of less than 100 mJ. By lowering the applied voltage, the spark energy is also reduced. Generally, the voltage that can be applied between two adjacent plate electrodes according to the present invention is in the range of 0.5 to 20 kV such as about 1 kV.

In preferred embodiments of the present invention, the electrostatic separator comprises at least 5, preferably at least 8 plate electrodes positioned in the separation chamber. The number of plates used is basically unlimited, but the energy level of possible sparks has to be taken into account. As such, the electrostatic separator generally comprises less than 20 plate electrodes and preferably less than 15 electrodes.

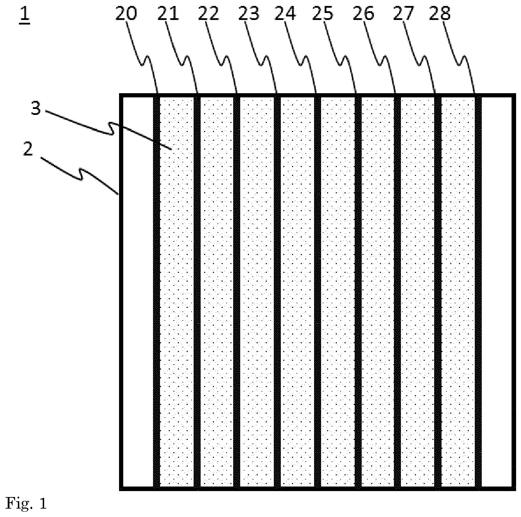

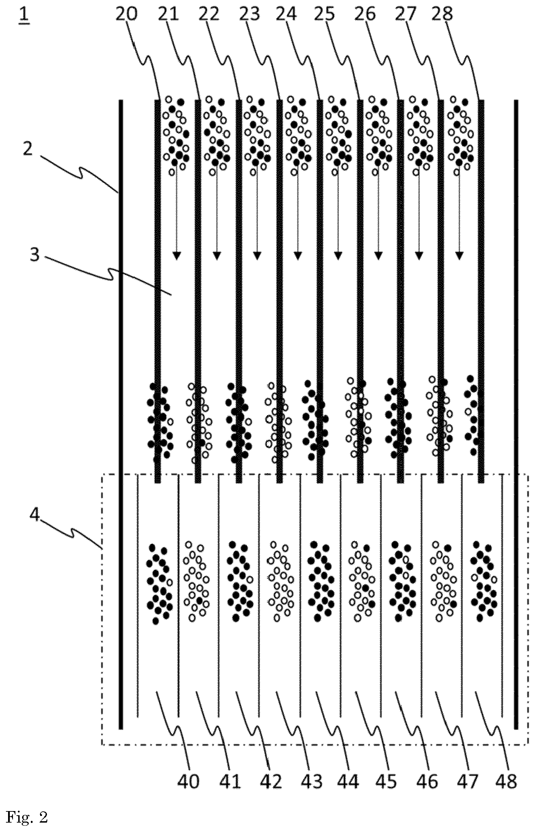

A particular embodiment is illustrated in Figures 1 and 2. In Figure 1, a cross-sectional front view of the separation chamber is illustrated. The electrostatic separator (1) comprises a separation chamber (2) which comprises at least three plate electrodes (20-28) that are positioned substantially parallel and are spaced apart from adjacent plate electrodes. When in use, the plate electrodes are typically placed substantially vertical, but other orientations such as horizontal may also be possible. Between the outer surface parts of adjacent plate electrodes which are facing each other, the flow path (3) is provided. The total surface area that is available for the foodstuff composition to flow through (illustrated in Figure 1 with the dotted area) is herein also referred to as the flow-through area. Due to the presence of three of more plate electrodes, the flow-through area (m²) of the electrostatic separator per plate electrode surface (m²) according to the present invention is advantageously much lower compared to the flow-through area (m²) of the electrostatic separator per plate electrode surface (m²) of an electrostatic separator comprising only two plate electrodes, as is for instance disclosed in Wang 2015.

The plate electrodes as illustrated in Figure 1 are alternately chargeable with a positive and a negative electric charge or alternately grounded and either positively or negatively charged. For example, in the former instance, plates 20, 22, 24, 26 and 28 can be positively charged and plates 21, 23, 25 and 27 can be negatively charged, and vice versa. In the latter instance, plates 20, 22, 24, 26 and 28 can all be positively charged or all be negatively charged, while plates 21, 23, 25 and 27 are grounded, and vice versa.

In a particular embodiment of the invention, as is illustrated in Figure 2, which is a cross-sectional top view, the electrostatic separator further comprises an outlet section (4) comprising outlets (41-48) positioned after the separation chamber. A stream of tribo-electric charged foodstuff particles (as partially illustrated in Figure 2 by the solid and open circular particles) that enter the separation chamber (2) (the direction being indicted by the arrows) are separated by the plate electrodes (20-28). The separated fractions can then be collected in the outlet section (4) comprising the outlets (41-48). In this particular embodiment, the outlets are positioned in continuation of the flow path. Outlets that comprise the same foodstuff components (*i.e*. outlets that continue from electroplates having the same charge) can be combined or connected further downstream in order to combine the same foodstuff components. In an embodiment as illustrated in Figures 1 and 2, typically two types of stream comprising the same foodstuff components can be obtained.

The separated foodstuff components that are separated in the electrostatic separator described above and illustrated in Figures 1 and 2 are generally free flowing. Accordingly, the air stream with which the particles are carried and transported through the separator provides enough drag force to detach the separated particles from the plate electrodes and carry them into the outlet section. In some embodiments however, the adhesive force on the plate electrodes may be too strong to be overcome by drag forces. In such cases, mechanical vibrators, compressed gas and/or scrapers may be used to provide additional forces to remove the components from the plate electrodes.

Accordingly, in a preferred embodiment, the electrostatic separator comprises one or more scrapers per plate electrode to remove adhered foodstuff components from the plate electrodes. In such embodiment, the one or more scrapers can move with respect to the surface of the plate electrodes to remove the adhered foodstuff components. This means that the scrapers can move over the surface, the surface of the plate electrodes can move underneath and/or above the scrapers, or a combination thereof.

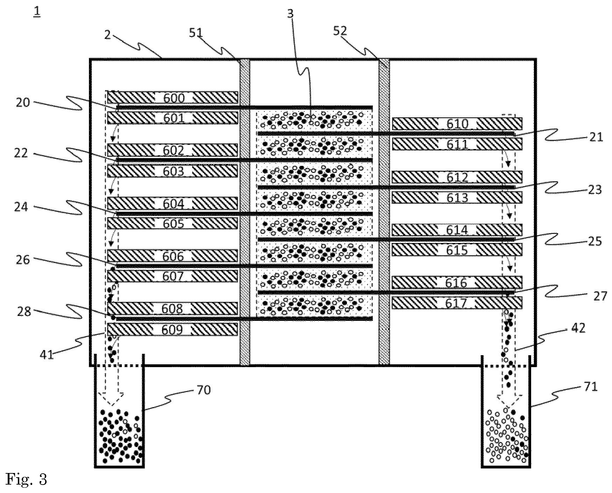

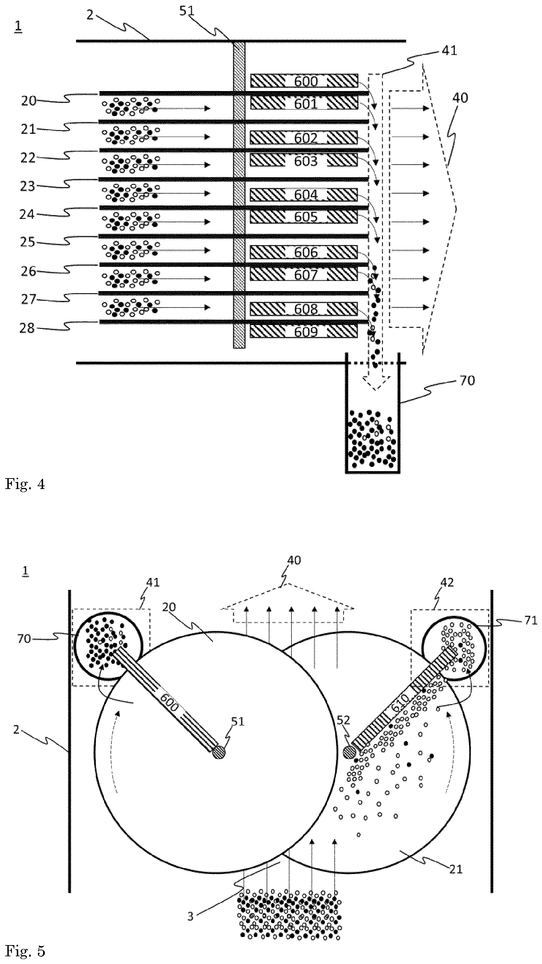

In Figures 3-5, a particularly preferred embodiment based on rotating disks is illustrated. In Figure 3, a cross-sectional front view of such an electrostatic separator (1) is illustrated, while in Figure 4 and Figure 5 a cross-sectional side view and cross-sectional top view are respectively illustrated. In the separation chamber (2), the plate electrodes (20-28) are arranged to be rotated alternately around a first and a second rotation axis (51, 52), which rotation axes are substantially parallel, provided at a distance from each other and substantially perpendicular to the plate electrodes. The outer surface parts of adjacent plate electrodes are facing each other between the two rotation axes (51, 52). The flow path (3) is typically provided between the outer surface parts of adjacent plate electrodes which are facing each other and between the two rotation axes. The flow-through area (illustrated in Figure 3 with the dotted area) does typically not span the entire width of the plate electrodes, but only a part thereof.

Advantageously, the plate electrodes (20-28) may be disk-shaped. As such, they can be rotated around the axes (51, 52) underneath and/or above one or scrapers (600-617), as is illustrated in Figures 3-5 as well. The scrapers can scrape off or remove the adhered foodstuff components (as partially illustrated in Figures 3-5 by the solid and open circular particles) which can then be moved into the outlet section (4) comprising the outlets (41, 42).

Advantageously, the present embodiment comprises at least three outlets for three streams of separated foodstuff components. Two outlets (41, 42) of these outlets are at an angle, typically perpendicular, to the flow path (3) and one outlet (40) is a continuation of the flow path. This allows the separation of three types of foodstuff components: two streams comprising positively or negatively charged particles and one stream comprising particles that continue along the flow path because it is not attached to the charged plate electrodes, for instance because the particles are not charged or charged too little, or because the particles are too large. The streams of particles that are scraped of the plate electrodes can be collected in collection chambers (70, 71) as indicated with the curly arrows directed onto the outlets 41 and 42 in Figures 3-5.

The scrapers are preferably positioned near each plate electrode and arranged to scrape off foodstuff components collected at the plate electrode. The scrapers are preferably based on a solid, non-conductive material such that the foodstuff components are not contaminated with dislodged materials from the scrapers. Brushes for examples are therefore less preferred. More preferred are non-conducting strips and/or plates (*e.g.* polytetrafluoroethylene (PTFE or Teflon™, Glass fiber) or durable rubber flaps. Non-conducting strips and/or plates are particularly durable and therefore most preferred. However, hard surface-based scrapers generally require a very even and regular surface of the plate electrodes allowing a short distance between the scrapers and the surface of the plate electrodes while avoiding the occasional contact between the scrapers and the electroplates. When the scrapers are based on a rigid, inflexible material, such contact is preferably avoided to limit wear of the separator components. The present inventors found that if the plate electrodes are cut from the plate materials at a low temperature, *e*.*g*. by water jet cutting, deformation of the plates can be sufficiently controlled and the resulting plate electrodes have a sufficiently even and regular surface.

As is illustrated in Figure 5, the disk-shaped plate electrodes can rotate such that the outer surfaces of the plate electrodes facing at least part of an outer surface of adjacent plate electrodes (*i.e*. the outer surface facing the flow path) are rotating in the direction against the flow path (herein referred to as outward rotation). Alternatively, the reverse is also possible, wherein the plates are rotated such that the outer surfaces facing the flow path are rotating in the direction with the flow path (herein referred to as inward rotation). In these embodiments, the plate electrodes that rotate around the first axis, rotate in another direction as the plate electrodes that rotate around the second axis. In yet another embodiment, which is the least preferred, all plate electrodes rotate in the same direction (*e*.*g*. clockwise or anti-clockwise).

The inventors found that outward and inward rotation of the plate electrodes may provide different results. Typically, outward rotation results in a better separation in terms of purity but also lower yields, while inward rotation results in a poorer separation in terms of purity but in higher yields. Without wishing to be bound by theory, the present inventors believe that the chance for the foodstuff particles to adhere to the electrode plates is less during outward rotation such that only the sufficiently charged particles experience sufficient forces to contact and adhere to an electrode plate. As such, the separation in term of purity is higher, but the yield is lower since lesser charged particles are not separated and continue in the flow path to outlet 40. For inward rotation, the reverse phenomenon is believed to occur. Moreover, advantageously, as the speed and the direction of the rotating disks can be altered, the flow condition of the air in the separator can be changed from static, laminar or turbulent. This will affect the type of particles that can adhere to the disks, thereby determining the yield and purity of the target components.

The electrostatic separator according to the present invention preferably further comprises a charging chamber in front of the separation chamber for tribo-electrostatic charging of at least part of the foodstuff components. Thus, in an embodiment of the invention, an uncharged foodstuff composition is flown through the charging chamber by an air stream wherein the foodstuff composition is at least partially tribo-electrostatically charged after which it immediately enters the separation chamber as described herein.

It may be appreciated that the electrostatic separator and the process according to the present invention as described herein is not necessarily limited to the separation of foodstuff. Other applications may for instance be the separation of micro plastics, minerals, dried sludge and other similarly sized particles. In this respect, with similarly and suitably sized particles is meant particles having a particle size of less than 400 µm as described herein-above for the foodstuff particles. Accordingly, the charged particles preferably have a particle size of less than 100 µm, more preferably less than 80 µm, even more preferably in the range of 0.1 to 60 µm, most preferably in the range of 1 to 40 µm. Accordingly, more generally, the present method may comprises the electrostatic separation of particles present in a particle composition, by the electrostatic separator, said method comprising
- providing a stream of the particle composition comprising the particles;
- tribo-electrostatically charging at least part of the particles to provide a stream of charged particles;
- flowing the stream of particles into the separation chamber following the flow path; and
- obtaining at least two fractions of separated particles.

For the purpose of clarity and a concise description, features are described herein as part of the same or separate embodiments, however, it will be appreciated that the scope of the invention may include embodiments having combinations of all or some of the features described.

As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features.

The invention is illustrated with the following non-limiting examples.

### Example 1

Various commercially available raw foodstuff compositions were fed into the electrostatic separator as illustrated in Figures 3-5.

The separator used was equipped with a total of 9 disk-shaped plate electrodes of 200 mm in diameter having a thickness of 2 mm, which were spaced apart by 20 mm and placed on 2 mm axe. This gave a flow-through area of 176 cm². An alternating voltage of ±2.5 kV/cm was applied over the plate electrodes and the foodstuff composition in an amount of about 300 g/min was fed into the separator with an air flow of 73 L/min.

Table 1 shows the results.

**Table 1**

| **Commercial available Raw material** | **Protein level%** | | **Yield (kg enriched protein fraction/kg raw material)** |
|---|---|---|---|
| | **Raw material** | **Electrostatic separated** | |
| **Pea protein, air classified** | 50 | 60 | 36% |
| **Lupin Flour** | 40 | 63 | 25% |
| **Lupin protein, air classified** | 57 | 64 | 37% |
| **Soy flour toasted** | 40 | 51 | 25% |
| **Soy flour raw** | 38 | 42 | 31% |
| **Soy flour defatted** | 50 | 58 | 17% |

### Example 2

A raw feed of wheat flour was fed into the electrostatic separator as illustrated in Figures 3-5 to improve the baking quality of wheat flour with an ash-level of 0.56%.

The separator used was equipped with a total of 9 disk-shaped plate electrodes of 200 mm in diameter having a thickness of 2 mm, which were spaced apart by 20 mm and placed on 2 mm axe. This gave a flow-through area of 176 cm². A alternating voltage of ±2.5 kV/cm was applied over the plate electrodes and the foodstuff composition in an amount of about 300 g/min was fed into the separator with an air flow of 73 L/min.

The volume of bread was measured, made from flour from the positive as well as negative disks, to determine the baking quality. Table 2 shows the results.

**Table 2**

| **Charge of disk** | **Yield (kg product/kg raw material)** | **Bread volume 1% of blanco]** |
|---|---|---|
| negative | 0.14 | 106 |
| positive | 0.15 | 98 |

## Claims

1. Electrostatic separator for the separation of foodstuff components present in a foodstuff composition, said separator comprising a separation chamber and at least three plate electrodes positioned in the separation chamber, wherein
- the plate electrodes are positioned substantially parallel and are spaced apart from adjacent plate electrodes;
- at least part of an outer surface of the plate electrodes faces at least part of an outer surface of adjacent plate electrodes;
- a flow path for a stream of foodstuff components is provided between the outer surface parts of adjacent plate electrodes which are facing each other; and
- the plate electrodes are alternately chargeable with a positive and a negative electric charge or alternately grounded and either positively or negatively electric chargeable.

2. Electrostatic separator according to the previous claim, wherein the plate electrodes are spaced apart by a distance in the range of 1 mm to 5 cm, preferably 5 mm to 2.5 cm, more preferably 7.5 mm to 1.5 cm such as about 1 cm.

3. Electrostatic separator according to any of the previous claims, comprising at least 5, preferably at least 8 plate electrodes positioned in the separation chamber.

4. Electrostatic separator according to any of the previous claims, further comprising outlets positioned after the separation chamber, wherein at least one, preferably all of the outlets are positioned in continuation of the flow path for collecting the stream of separated particles for each plate electrode.

5. Electrostatic separator according to any of previous claims, wherein the plate electrodes are arranged to be rotated alternately around a first and a second rotation axis, which rotation axes are substantially parallel, provided at a distance from each other and substantially perpendicular to the plate electrodes.

6. Electrostatic separator according to the previous claim, wherein the outer surface parts of adjacent plate electrodes which are facing each other are positioned between the two rotation axes.

7. Electrostatic separator according to any of claims 5-6, wherein the flow path said is provided between the outer surface parts of adjacent plate electrodes which are facing each other and between the two rotation axes.

8. Electrostatic separator according to any of claims 5-7, further comprising at least three outlets for three streams of separated foodstuff components of which two outlets are at an angle, typically perpendicular, to the flow path and one outlet is a continuation of the flow path.

9. Electrostatic separator according to any of the previous claims, further comprising at least one scraper positioned near each plate electrode, which scraper is arranged to scrape off foodstuff components collected at the plate electrode.

10. Electrostatic separator according to any of the previous claims, further comprising a charging chamber in front of the separation chamber for tribo-electrostatic charging of at least part of the foodstuff components.

11. Method for the electrostatic separation of particles present in a particle composition, preferably foodstuff components present in a foodstuff composition, by the electrostatic separator according to any of the previous claims, said method comprising
- providing a stream of the particle composition comprising the particles, preferably a stream of foodstuff comprising foodstuff components;
- tribo-electrostatically charging at least part of the particles, preferably at least part of the foodstuff components to provide a stream of charged particles, preferably charged foodstuff components;
- flowing the stream of particles, preferably charged foodstuff components into the separation chamber following the flow path; and
- obtaining at least two fractions of separated particles, preferably foodstuff components.

12. Method according to the previous claim, wherein the particle composition comprises particles having a particle size of less than 400 µm and preferably wherein the charged particles, preferably charged foodstuff components have a particle size of less than 100 µm, more preferably less than 80 µm, even more preferably in the range of 0.1 to 60 µm, most preferably in the range of 1 to 40 µm.

13. Method according to any of claims 11-12, wherein the foodstuff composition comprises at least two foodstuff components selected from the group consisting of proteins such as gluten, fibers such as cell walls, aleurone fibers, beta glucans and seed coats, and polysaccharides such as starch.

14. Method according to any of claims 11-13, wherein the foodstuff is selected or originates from the group consisting of pulses, in particular oil-comprising pulses, press cakes, grains, in particular cereal grains, preferably wherein the foodstuff is selected from the group consisting of de-oiled press cakes, oil-comprising pulse flours and wheat flour, most preferably from the group consisting of soy flour and lupine flour.

15. Method according to the previous claim, wherein the foodstuff has been pre-treated with air sifting, preferably air sifting to remove starch.
